# EUROPEAN PATENT APPLICATION

(11) **EP 2 381 553 A2**
(43) Date of publication of application: **26.10.2011**
(21) Application number: 11163369.9
(22) Date of filing: 21.04.2011
(51) Int. Cl.: H02G 3/32

(54) **Clamp**

(30) Priority: 26.04.2010 JP 2010101008
(71) Applicant: Newfrey LLC, Newark, Delaware 19711 (US)
(72) Inventor: Mori, Shinji, Toyota-shi Aichi 471-8571 (JP); Ide, Toyoka, Toyota-shi Aichi 471-8571 (JP); Aoshima, Yuuki, Tokyo Tokyo 102-0094 (JP)
(74) Representative: Haar, Lucas Heinz Jörn

(57) **Abstract**

An object of the invention is to provide a carpet clamp which fits to members having different diameters which are held in the clamp. In the case where a member held in the clamp has a small diameter, the carpet clamp itself has a small outside dimension (height), and thus space can be utilized effectively.

A tang portion (24) of a clamp member (20) of the carpet clamp (10) deforms elastically, and thus fits to the wire harnesses (W) having different diameters. Further, in the case where the wire harness (W) has a small diameter, the tang portion (24) of the clamp member (20) deforms elastically and is moved towards the inside, and thus the outside dimension of the carpet clamp (10) becomes substantially small in accordance with the wire harness (W) having a small diameter. The carpet clamp (10) has a height which is smaller by a dimension (h) than in the case where the wire harness (W) has a large diameter.

## Description

### FIELD OF THE INVENTION

The present invention relates to a clamp, in particular a carpet clamp that clamps and holds a material to be clamped such as a wire harness in a prescribed location.

### BACKGROUND OF THE INVENTION

In vehicles such as automobiles, various wire harnesses are distributed and held in prescribed locations, but for example, a wire harness is held to the vehicle body by a carpet clamp on the inside of the scuff plate at the bottom of the front door opening part.

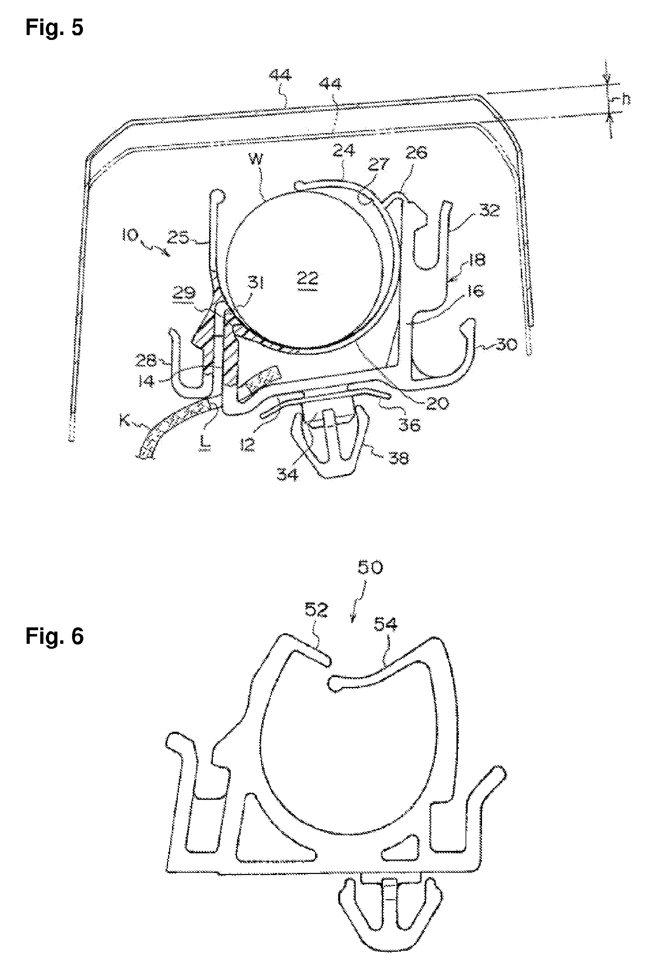

As is shown in Fig. 6, a conventional carpet clamp 50 of this type has a constitution where a wire harness is clamped and held by the pair of a clamping piece 52 and a clamping piece 54, but a different type of carpet clamp must be established for each vehicle model according to the differences in the size (radial dimensions) of the wire harness held. In other words, if priority is given to the ability of passengers to enter and leave the vehicle by widening the vehicle door opening part, a carpet clamp 50 with the external form (total height) set as small as possible according to the wire harness, which differs in the radial dimension for each vehicle, is required, and a plurality of types of carpet clamps 50 must be established.

On the other hand, if the carpet clamp 50 of this sort is made common and used for each of the vehicle models, a problem arises in that a carpet clip 50 that is used in models that use wire harnesses with large radial dimensions must be used in other models. In other words, even with a model that uses a small radial dimension wire harness (even when a carpet clamp 50 with an shape having a small total height is sufficient), the carpet clamp 50 used in the model that uses a large radial dimension wire harness (shape with a large total height) is used. Therefore, a scuff plate installed so as to cover this wire harness and carpet clamp 50 must be in the end installed in a high position, necessarily encroaching on the door opening part of the vehicle and becoming a factor inhibiting the ease of passengers entering and leaving the vehicle.

Therefore, the dimensions of the external form (total height) for the conventional carpet clamp 50 do not change even if the radial dimension of the wire harness held is small, so the required space may be a factor that encroaches. On the other hand, when the radial dimension of the wire harness that is held was large, there was a need to install a different type of carpet clamp 50 with a large external form (total height) to handle this.

In such cases, there have been proposals for wire harness holding clips constituted so as to be able to handle wire harnesses with different radial dimensions (see, for example, JP-A 2009-303412).

In the wire harness holding clip as shown in JP-A 2009-303412, an arch shaped contact part that comes into contact with the bottom (back surface part) of the wire harness that is inserted is constituted such that even wire harnesses with different diameters may be clamped and held by its deflecting and deforming from a convex state to a concave state.

However, while wire harnesses with different radial dimensions can be accommodated to a certain extent by the conventional wire harness holding clip shown in the patent application publication above, the constitution is such that the differences in the radial dimensions of the wire harness that is held are absorbed by the deflection and deformation of the arch shaped contact part that comes into contact with the bottom (back surface part) of this wire harness. Therefore, the external form dimensions (total height) of this wire harness holding clip do not change substantially when a wire harness with a large radial dimension is held or even when a wire harness with a small radial dimension is held. Therefore, even though the external form dimensions (total height) of the wire harness holding clip could be set smaller when the radial dimension for the wire harness that is held is small, the height of the external form for this wire harness holding clip is wasteful (higher than necessary). This cannot sufficiently solve the problem described earlier.

### SUMMARY OF THE INVENTION

Considering the facts described above, an object of the present invention is to obtain a clamp in particular a carpet clamp capable of accommodating material to be clamped of different radial dimensions when holding material to be clamped, such as a wire harness, not only expanding the range of use, but also capable of becoming substantially smaller itself in external form dimensions (total height) when the radial dimension of the material to be clamped and held is small and capable of using placement space effectively.

The clamp of the invention according to claim 1 is formed as a unit of a main body that is secured to a vehicle body and has a pair of tangs, having elasticity, connected to that main body positioned opposite to each other and extending in a tongue shape such that an insertion part which opens on one side by the pair of tangs allowing the insertion of a material to be clamped, the material to be clamped that has been inserted into the insertion part is clamped by the tangs, a clamp piece for which the clamping position is changeable along the insertion orientation for the material to beclamped by elastic deformation of one tang is also provided and a means for exerting an applied force that exerts a force applied to that one tang is provided such that the clamping position is on the inside in the direction of insertion of the material to be clamped because of the one tang.

In the clamp of the invention according to claim 1, the insertion part is provided in the clamp piece formed continuously with the main body, and along with the material to be clamped being inserted into this insertion part, the material to be clamped that is inserted into the insertion part is clamped and held by the pair of tangs from the opening side of the insertion part.

Here, in the clamp of the invention according to claim 1, one of the tangs of the clamp piece that clamps the material to be clamped that is inserted into the insertion part is capable of changing the clamping position along the direction of insertion of this material to be clamped by deforming elastically, and, by the means for exerting an applied force, one of the tangs of this clamp piece exerts an applied force such that the clamping position due to one of the tangs is on the inside in the direction of insertion of the material to be clamped, thus allowing accommodation of different radial dimensions of the material to be clamped. In other words, even if the material to be clamped that is being held has a different radial dimension, this difference in dimension may be absorbed by the elastic deformation of one of the tangs, and any such material to be clamped may be held whether it is a material to be clamped with a small radial dimension or a material to be clamped with a large radial dimension. Therefore, the necessity for establishing separate types of clamps for each vehicle model according to the differences in the size (radial dimensions) of the material to be clamped that is held disappears, and clamps may be used in common for each of the different vehicle models, expanding the range of application.

Furthermore, when the radial dimension of the material to be clamped that is held is small, one of the tangs facilitated by the deflecting and deformation by the means for exerting an applied force deforms elastically along the direction of insertion of the material to be clamped and changes the clamping position. Therefore, the dimensions of the external form of the clamp itself become substantially smaller according to the small diameter material to be clamped (total height is reduced). Therefore, there is no unnecessary encroachment of the installation space, and for example, there is no factor inhibiting the ease of passengers entering and leaving the vehicle.

Therefore, with the clamp recited in claim 1, the range of application for materials being clamped with different radial dimensions that can be accommodated is expanded, and when the radial dimension of the material to be clamped that is held is small, its own dimensions for the external form (total height) may be made substantially smaller and installation space may be used efficiently.

The clamp according of the invention according to claim 2 is the clamp recited in claim 1, wherein at least one of the tangs of the clamp piece is formed from a resin material, and the means for exerting an applied force is provided on the inner circumferential surface on the insertion part side of the one tang, and a groove part is provided that promotes the deflection and deformation of the one tang in a direction that forms the inside of the direction of insertion of the material to be clamped.

In the clamp recited in claim 2, one tang of the clamp piece is formed from a resin material, and a groove part is provided in the inner circumferential surface on the insertion part side of this one tang. The deflection and deformation of the one tang formed of resin is promoted by providing this groove part, and greater applied force is exerted compared to the case when this groove part is not provided. Therefore, operation identical to the clamp of the invention according to claim 1 described above is accomplished.

Furthermore, the constitution is simple, providing a groove part on the inside circumferential surface of the one tang of the clamp piece that is formed of resin; therefore, it may be achieved easily without increases in the number of components, cost or weight.

The clamp of the invention according to claim 1 has the superior effect of being capable of accommodating material to be clamped of different radial dimensions when holding material to be clamped, such as a wire harness, not only expanding the range of use, but also capable of becoming substantially smaller itself in external form dimensions (total height) when the radial dimension of the material to be clamped and held is small and capable of using placement space effectively.

The clamp of the invention of according to claim 2 has the superior effect of being able to achieve a simple structure in addition to the superior effects of the clamp of the invention according to claim 1.

### BRIEF DESCRIPTION OF DRAWINGS

Fig. 1 shows the constitution of a carpet clamp according to an embodiment of the present invention and is a partial cutaway front view in the state of holding a wire harness.
Fig. 2 shows the constitution of a carpet clamp according to an embodiment of the present invention and is a partial cutaway front view in a state with a clamp open.
Fig. 3 is a schematic perspective view showing the constitution of the periphery of a front door opening for a vehicle where a carpet clamp according to an embodiment of the present invention is used.
Fig. 4 is a partial cutaway front view corresponding to Fig. 1 showing the state of wire harnesses with different radial dimensions being held by the carpet clamp according to an embodiment of the present invention.
Fig. 5 is a partial cutaway front view corresponding to Fig. 3 showing the contrast in the attachment position for a scuff plate when a small diameter wire harness is held by a carpet clamp according to an embodiment of the present invention.
Fig. 6 is a front view showing the constitution of a conventional carpet clamp.

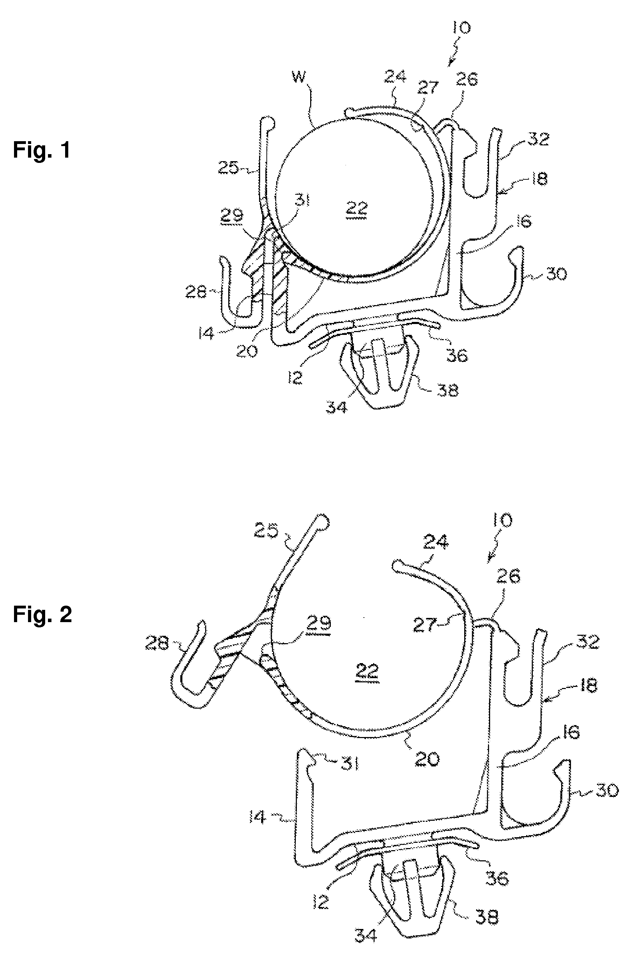

In the following, an embodiment of the present invention will be described using Fig. 1 through Fig. 5.

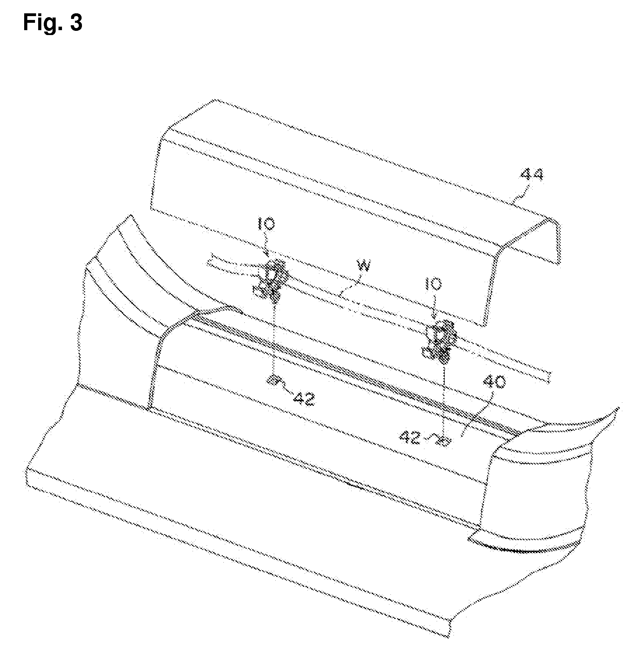

Fig. 3 shows a schematic perspective view of the constitution of the periphery of a front door opening for a vehicle where a carpet clamp 10 according to the embodiment of the present invention is used.

A wire harness W is arranged as a material to be clamped along a locker 40 in this front door opening and held by carpet clamps 10 at a prescribed interval. Furthermore, these carpet clamps 10 are constituted such that they latch in fastening holes 42 and the wire harness W is held to the vehicle body. Furthermore, a scuff plate 44 is attached on the outside of this wire harness W and carpet clamps 10 and covers these.

In Fig. 1 and Fig. 2, the constitution of the carpet clamp 10 as a whole is shown in a front view.

The carpet clamp 10 is formed from the resin material and is provided with a main body 18 formed as a whole in a U-shape by a bottom wall 12, side wall 14 and side wall 16.

In addition, a clamp piece 20 is formed continuously as a unit on the inside of the main body 18. This clamp piece 20 is formed in a circular arch with one side open by the pair of tang 24 and tang 25 extending in a tongue shape and opposed to each other. Furthermore, substantially the middle part of the one tang 24 is connected as a unit to the upper end of the side wall 16 by a connecting hinge part 26 that is formed thinly. The inner space surrounded by the clamp piece 20 (tang 24 and tang 25) is an insertion part 22, and a wire harness W may be pushed in and inserted into the insertion part 22.

This clamp piece 20 (tang 24 and tang 25) has a prescribed elasticity, and it comes into contact with the upper edge of the wire harness W inserted into the insertion part 22 and can hold it.

Furthermore, a groove part 27 is provided on the one tang 24 of the clamp piece 20 as a means for exerting an applied force. The groove part 27 is provided on the inner circumferential surface on the side of the insertion part 22 in the neighborhood of the connecting hinge part 26 for the tang 24. In other words, the deflection and deformation of the one tang 24 that is formed of resin is promoted in the forming process by providing this groove part 27, and the constitution is such that greater applied force is exerted compared to the case when this groove part 27 is not provided. Therefore, the tang 24 of clamp piece 20 is constituted such that an applied force (deflecting and the forming force) is promoted in the direction of the bottom wall 12 (that is, the contact and holding position for the wire harness W by the tang 24 in the direction of insertion of the wire harness W to the inside).

On the other hand, a fastening hole 29 is formed on the other tang 25 of the clamp piece 20 substantially in the middle part. This fastening hole 29 corresponds to a fastening claw 31 formed on the tip of the side wall 14 of the main body 18, and it is such that they join to each other. In other words, as is shown in Fig. 1, in a state where the fastening hole 29 and the fastening claw 31 are joined, the clamp piece 20 is connected and held as a unit to the main body 18. In addition, as is shown in Fig. 2, the clamp piece 20 may open, close and move centered with the connecting hinge part 26 as the rotational center by releasing the fastening hole 29 and the fastening claw 31 and separating them from each other.

In this instance, in the state where the fastening hole 29 and the fastening claw 31 are released and the clamp piece 20 is open, a penetrating hole L provided in a vehicle carpet K (see Fig. 5) may be fitted to the side wall 14 of the main body 18, and the constitution is such that the carpet K may be fastened to the carpet clamp 10 by this means.

Furthermore, a U-shaped tongue piece 28 is provided extending as a unit on the outer peripheral side (opposite side from the insertion part 22) substantially in the middle part (that is, in the vicinity of the fastening hole 29) of the tang 25 opposite the clamp piece 20 and is a part where another member not shown in the drawing may be fitted.

In addition, an L-shaped tongue piece 30 is provided extending as a unit on the bottom part of the outer peripheral side (side opposite of the insertion part 22) of the side wall 16 of the main body 18, and is a part where another member (for example an opener cable) not shown in the drawing may be may be fitted. Furthermore, a U-shaped tongue piece 32 is provided extending as a unit with the side wall 16 above the tongue piece 30 and is a part where another member not shown in the drawing may be fitted.

In addition, a shaft part 34 is formed protruding as a unit on the rear surface side of the bottom wall 12 of the main body 18. An insertion fastening piece 38 is formed as a unit at the tip of the shaft part 34 along with a skirt part 36 being formed at the peripheral edge of this shaft part 34. The insertion fastening piece 38 catches at the back surface side peripheral edge part of the fastening hole 42 by inserting the insertion fastening piece 38 of the shaft part 34 into the fastening hole 42, and furthermore, the skirt part 36 makes close contact with front surface side peripheral edge part of the fastening hole 42. Therefore, constitution is such that the carpet clamp 10 is fastened to the vehicle body.

In the following, the operation and effects of this embodiment will be described.

In the carpet clamp 10 with the constitution described above the clamp piece 20 is formed continuously as a unit on the main body 18, and the insertion part 22 is constituted by this clamp piece 20. First of all, when the wire harness W and carpet K are held by the carpet clamp 10, the joining of the fastening hole 29 of the tang 25 of the clamp piece 20 and the fastening claw 31 of the side wall 14 of the main body 18 is released as is shown in Fig. 2, and the clamp piece 20 is in the open state. Furthermore, the penetrating hole L provided in the vehicle carpet K (see Fig. 5) is fitted to the side wall 14 of the main body 18, and the carpet K is fastened to the carpet clamp 10. Furthermore, the fastening claw 31 is joined to the fastening hole 29 once again, and the clamp piece 20 is held continuously as a unit in the main body 18.

Next, the wire harness W is inserted into the insertion part 22 of the clamp piece 20. Along with the wire harness W being inserted into the insertion part 22, the wire harness W that is inserted into the insertion part 22 is sandwiched and clamped by the clamp piece 20 (tang 24 and tang 25) from the upper edge thereof.

Furthermore, the insertion fastening piece 38 catches at the back surface side peripheral edge part of the fastening hole 42 by inserting the shaft part 34 of the carpet clamp 10 into the fastening hole 42, and therefore, the wire harness W and carpet K are held to the vehicle body along with the carpet clamp 10.

Moreover, the operation may be performed with a rearrangement of the assembly steps described above before and after each other. In other words, the carpet clamp 10 may be held in the vehicle body, and thereafter the carpet K and wire harness W made to be held in the carpet clamp 10.

Here, in the carpet clamp 10 according to the present embodiment, the tang 24 of the clamp piece 20 that clamps the wire harness W that is inserted into the insertion part 22 can change the clamping position for the wire harness W along the direction of insertion of the wire harness W by elastic deformation. Furthermore, the groove part 27 with a V-shaped cross-section is provided in the tang 24, promoting the deflection and deformation of the one tang 24 formed of resin in the forming process, and the constitution is such that greater applied force is exerted compared to the case when this groove part 27 is not provided. Therefore, the tang 24 of clamp piece 20 is constituted such that an applied force (deflecting and the forming force) is promoted in the direction of the bottom wall 12 (that is, the contact and holding position for the wire harness W by the tang 24 in the direction of insertion of the wire harness W to the inside), so a wire harness W with a different radial dimension may be accommodated.

In other words, even if the radial dimension of the wire harness W that is held is different, the tang 24 of clamp piece 20 can absorb this dimensional difference by elastic deformation, and any wire harness W, whether a wire harness W with a large radial dimension or a wire harness W with a small diameter may be held.

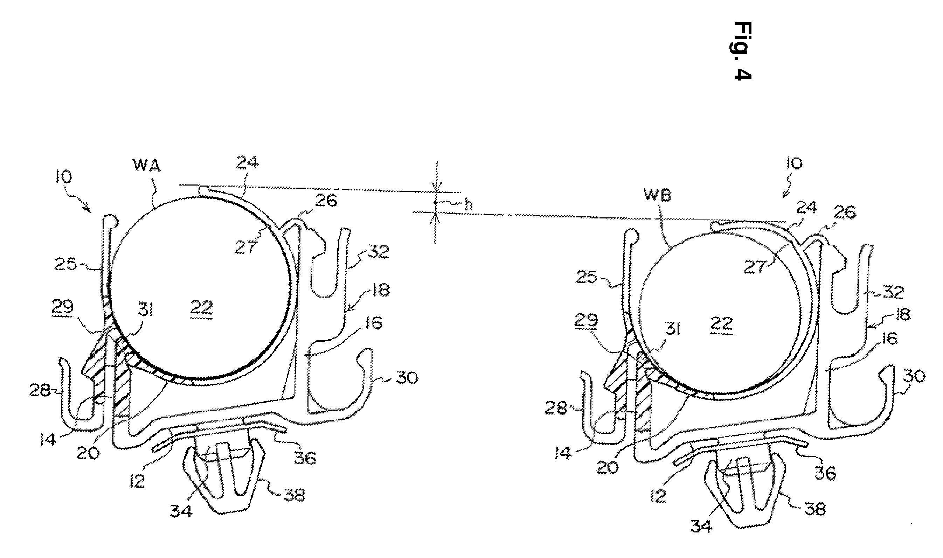

For example, carpet clamps 10 that hold wire harnesses W with different radial dimensions are shown in Fig. 4; the left-hand side shows the state holding a large diameter (24 mm) wire harness WA, and the right-hand side shows the state holding a small diameter (21 mm) wire harness WB.

As is clear from this Fig. 4, even if the radial dimension of the wire harness W that is held is different, it may be reliably held by absorbing this dimensional difference by elastic deformation of the tang 24 of clamp piece 20, and either case may be accommodated.

Therefore, the necessity for establishing separate types of carpet clamps 10 for each vehicle model according to the differences in the size (radial dimension) of the wire harness W that is held disappears, and the carpet clamp 10 may be used in common for each of the different vehicle models, expanding the range of application.

Furthermore, as is shown in Fig. 4, when the radial dimension of the wire harness W that is held is small (21 mm), the tang 24 of clamp piece 20, for which deflection and deformation are promoted by providing the groove 27, deforms elastically in the direction that forms the inside in the direction of insertion of the wire harness W and changes the clamping position. Therefore, the external form of the carpet clamp 10 itself becomes substantially smaller in correspondence to this small diameter wire harness W, and the total height becomes substantially smaller by dimension h when compared to the case of the wire harness W with a large radial dimension (24 mm) that is held.

Therefore, as is shown in Fig. 5, the scuff plate 44 installed so as to cover this wire harness W and carpet clamp 10 may as a result be installed in a position that is lower by the dimension h (the surface position of the scuff plate 44 may be lower). Moreover, in Fig. 5, the installation position of the scuff plate 44 when a wire harness W with a large radial dimension (24 mm) that is held is shown by solid lines and the attachment position for the scuff plate 44 when a wire harness W with a small radial dimension (21 mm) that is held is shown by lines with alternate long and short dashes.

Therefore, when a wire harness with a small radial dimension (21 mm) is used, unnecessary encroachment upon the placement space by this wire harness W and carpet clamp 10 disappears, and for example, unnecessary encroachment into the door opening part of the vehicle may be prevented (the door opening part may be widened). Therefore, the ease of passengers entering and leaving the vehicle is greatly improved, and it becomes easy for passengers to get in and out of the vehicle.

Furthermore, with this carpet clamp 10, the constitution is simple, providing a groove part 27 on the inside circumferential surface of the one tang 24 of the clamp piece 20 that is formed of resin; therefore, it may be achieved easily without increases in the number of components, cost or weight.

As in the above, it is possible to handle wire harnesses W with different radial dimensions with the carpet clamp 10 according to the present embodiment and to expand the range of application. Furthermore, when the radial dimension of the wire harness W that is held is small, its own external form dimensions may be made substantially smaller (total height may be made lower), making it possible to use placement space effectively and achieve a simple constitution.

Moreover, in the embodiment described above, a constitution where the groove part 27 was provided on the inner circumferential surface of the one tang 24 of the clamp piece 20 formed from resin as the means for exerting an applied force was described, but the shape and size of this groove part 27 may be set conveniently according to the strength of the applied force given to the clamp piece 20, that is, according to the radial dimension and shape of the wire harness W inserted into the insertion part 22.

In addition, in the embodiment described above, a constitution where the groove part 27 was formed on the inner circumferential surface of the tang 24 of clamp piece 20 as the means for exerting an applied force was described, but the means for exerting an applied force is not limited to this, and there may be another constitution as long as it is one in which the application of the tang 24 of clamp piece 20 is in the direction to the inside of the insertion part 22 (direction of the bottom wall 12). For example, there may be a plate spring or the like interposed between the tang 24 of clamp piece 20 and the side wall 16 of the main body 18. Even in this case, the same operation and effect as the carpet clamp 10 according to the embodiment described previously may be obtained.

Furthermore, in the embodiment described previously, an example using the wire harness W as the material to be clamped was described, but the material to be clamped that is clamped and held by the carpet clamp 10 is not limited to this, and for example, it may be applied even if there is an elongated work piece such as a cable or pipe.

Furthermore, in the embodiment described previously, the example of carpet clamp 10 holding the wire harness W deployed in the front door opening part was described, but the location for use of the carpet clamp 10 is not limited to this, and it may be used even in other positions.

## Claims

1. A clamp (10) formed as a unit of a main body (18) that is adapted to be secured to a vehicle body and has a pair of tangs (24, 25), having elasticity, connected to said main body (18), positioned opposite to each other and extending in a tongue shape such that an insertion part (22) is formed, which opens on one side by the pair of tangs (24, 25) for allowing the insertion of a material to be clamped, and clamps said material to be clamped that has been inserted into said insertion part (22), **characterized by**
a clamp piece (20), the clamping position of which is changeable along the insertion orientation for said material to be clamped by elastic deformation of one tang (24) and
a means for exerting an applied force that exerts a force applied to said one tang (24) is provided such that said one tang (24) promotes said clamping position on the inside of said clamp piece (20) in the direction of insertion of said material to be clamped.

2. The clamp according to claim 1 wherein
at least one of said tangs (24, 25) extends from said clamp piece (20) and is formed from a resin material, and
said means for exerting an applied force is provided on the inner circumferential surface on the insertion part side of said one tang (24), and a groove part (27) is provided that promotes the deflection and deformation of said one tang (24) in a direction towards the inside of said clamp piece (20).

3. The clamp according to anyone of claims 1 and 2 wherein the clamp piece (20) is formed continuously as a unit on the inside of the main body (18) and in the shape of a circular arch with one side open by the pair of tangs (24, 25), the inner space surrounded by the clamp piece (20) and the tangs (24, 25) forming the insertion part (22).

4. The clamp according to anyone of claims 1 to 3 wherein the main body (18) is formed as a whole in a U-shape by a bottom wall (12), a first side wall (14) and a second side wall (16), and the one tang (24) is connected as a unit to the upper end of the second side wall (16) by a connecting hinge part (26).

5. The clamp according to claim 4 wherein the groove part (27) is provided on the inner circumferential surface of the one tang (24) on the side of the insertion part (22) in the neighborhood of the connecting hinge part (26).

6. The clamp according to anyone of claims 4 and 5 wherein a fastening hole (29) is formed on the other tang (25) of the clamp piece (20), the fastening hole (29) corresponding to a fastening claw (31) formed on the tip of the first side wall (14) of the main body (18) such that in a state where the fastening hole (29) and the fastening claw (31) are joined, the clamp piece (20) is connected and held as a unit to the main body (18), and that in a state where the fastening hole (29) and the fastening claw (31) are released and separated from each other, the clamp piece (20) may open, close and move centered with the connecting hinge part (26) as the rotational center.

7. The clamp according to anyone of claims 1 to 6 wherein a shaft part (34) is formed protruding as a unit on the outside of the main body (18), and an insertion fastening piece (38) is formed as a unit at the tip of the shaft part (34) along with a skirt part (36) being formed at the peripheral edge of this shaft part (34).

8. The clamp according to anyone of claims 1 to 7 wherein an L-shaped and/or U-shaped tongue piece (28, 30) is provided extending as a unit from the outer peripheral side of the main body (18) opposite of the clamp piece (20).
